**Europäisches Patentamt**

**European Patent Office**

**Office européen des brevets**

(19)

(11) Numéro de publication : **0 068 913**
**B1**

(12)     **FASCICULE DE BREVET EUROPÉEN**

(45) Date de publication du fascicule du brevet :
28.08.85

(21) Numéro de dépôt : 82400896.5

(22) Date de dépôt : 14.05.82

(51) Int. Cl.⁴ : **G 21 C 15/18, F 28 D 15/00**

(54) **Réacteur nucléaire à neutrons rapides muni de dispositif d'évacuation de la puissance résiduelle.**

(30) Priorité : 22.05.81 FR 8110227

(43) Date de publication de la demande :
05.01.83 Bulletin 83/01

(45) Mention de la délivrance du brevet :
28.08.85 Bulletin 85/35

(84) Etats contractants désignés :
BE DE GB IT NL

(56) Documents cités :
EP-A- 0 004 218
FR-A- 1 480 628
FR-A- 2 171 194
FR-A- 2 179 839
US-A- 2 961 393
US-A- 3 935 063
US-A- 4 051 892

(73) Titulaire : **COMMISSARIAT A L'ENERGIE ATOMIQUE
Etablissement de Caractère Scientifique Technique
et Industriel**
**31/33, rue de la Fédération**
**F-75015 Paris (FR)**

(72) Inventeur : **Bret, Antoine
Les Lauves d'Entremont Chemin de la Rose
F-13100 Aix en Provence (FR)**

(74) Mandataire : **Mongrédien, André et al
c/o BREVATOME 25, rue de Ponthieu
F-75008 Paris (FR)**

Jouve, 18, rue St-Denis, 75001 Paris, France

EP 0 068 913 B1

## Description

La présente invention concerne un réacteur nucléaire à neutrons rapides équipé d'au moins un dispositif d'évacuation de la puissance résiduelle.

On sait que dans un réacteur à neutrons rapides, le cœur du réacteur est immergé dans un volume déterminé de métal liquide (en général du sodium) contenu dans une cuve à axe vertical obturée à sa partie supérieure par une dalle de fermeture horizontale. En fonctionnement normal, la puissance dégagée par la réaction de fission dans le cœur du réacteur est absorbée par la circulation du métal liquide dans un circuit primaire comprenant des pompes primaires et des échangeurs intermédiaires assurant respectivement en fonctionnement la circulation continue et le refroidissement du métal liquide. Dans les réacteurs intégrés, l'ensemble du circuit primaire est localisé dans la cuve du réacteur, alors que ce circuit sort de la cuve dans un réacteur à boucle. Généralement, la chaleur extraite du cœur du réacteur par le métal liquide du circuit primaire est transférée à un métal liquide (en général du sodium) circulant dans un circuit secondaire comportant des générateurs de vapeur assurant à leur tour le transfert de la chaleur à un circuit eau/vapeur qui actionne les turbines de l'installation productrice d'énergie électrique.

On conçoit aisément qu'en cas d'accident de fonctionnement provoquant l'arrêt des pompes primaires, le cœur dans lequel la réaction de fission est immédiatement arrêtée grâce à la chute de barres de sécurité, dégage encore une puissance calorifique résiduelle importante qu'il convient d'éliminer de façon sûre et efficace afin d'éviter une fusion locale du cœur.

A cet effet, on a coutume de prévoir des boucles de refroidissement du réacteur à l'arrêt qui comportent des échangeurs de chaleur plongeant directement dans le métal liquide contenu dans la cuve et des pompes assurant la circulation du métal liquide (généralement du sodium) circulant dans ces boucles afin d'évacuer la puissance résiduelle du cœur par des échangeurs métal liquide/air.

Si ces boucles de refroidissement du réacteur à l'arrêt présentent des caractéristiques de fonctionnement tout à fait satisfaisantes, les nombreux composants (échangeurs, vase d'expansion, pompes électromagnétiques, système de purification, réservoir de stockage de sodium) qui se trouvent sur ces boucles ainsi que la différence de niveau (de l'ordre de 18 m) entre l'échangeur baignant dans le sodium et l'échangeur à air (différence de niveau qui se cumule avec la hauteur de la cheminée assurant le refroidissement de l'échangeur sodium-air) rendent leur réalisation relativement complexe et donc coûteuse. De plus, le fonctionnement de ces boucles nécessite un apport d'énergie mécanique extérieure au niveau des pompes assurant la circulation du métal liquide. Du point de vue de la sûreté, cette caractéristique n'est évidemment pas satisfaisante puisqu'elle rend ces boucles inefficaces en cas de défaillance du circuit d'alimentation électrique. Enfin, la quantité de chaleur évacuée par ces boucles de refroidissement du réacteur à l'arrêt doit être ajustée en fonction de la température du métal liquide dans la cuve.

La présente invention a précisément pour objet un réacteur nucléaire à neutrons rapides comprenant un nouveau système d'évacuation de la chaleur résiduelle d'une capacité comparable à celle des systèmes antérieurs tout en étant d'une réalisation plus simple réclamant des investissements moins coûteux. L'invention a également pour objet un réacteur dans lequel le système d'évacuation de la chaleur résiduelle fonctionne entièrement en convection naturelle sans apport d'énergie mécanique extérieure et bénéficie d'un effet autorégulateur permettant d'évacuer une énergie proportionnelle à la température du métal liquide contenu dans la cuve.

A cet effet et conformément à la présente invention, il est proposé un réacteur nucléaire à neutrons rapides comportant une cuve à axe vertical contenant le cœur du réacteur et un volume de métal liquide de refroidissement de celui-ci, une dalle de fermeture horizontale obturant la cuve à sa partie supérieure, au moins une pompe primaire et au moins un échangeur de chaleur assurant respectivement en fonctionnement la circulation du métal liquide dans le cœur et son refroidissement, et au moins un dispositif d'évacuation de la puissance résiduelle assurant le refroidissement du métal liquide en cas d'arrêt des pompes primaires, caractérisé en ce que le dispositif d'évacuation de la puissance résiduelle comprend un évaporateur comportant un faisceau de tubes en doigts de gant baignant dans le métal liquide, de façon à faire passer en phase vapeur un fluide caloporteur initialement en phase liquide, un collecteur adiabatique de ladite phase vapeur comportant un conduit traversant la dalle du réacteur et un condenseur dans lequel le fluide caloporteur en phase vapeur échange sa chaleur avec un fluide de refroidissement externe et se condense en phase liquide avant de redescendre dans l'évaporateur par le collecteur adiabatique.

Grâce à ces caractéristiques, on réalise un nouveau système d'évacuation de la chaleur résiduelle basé sur un cycle thermodynamique évaporation/condensation d'un fluide caloporteur tel que du mercure. Un tel système permet d'assurer un transfert axial d'énergie entre l'évaporateur situé dans le métal liquide contenu dans la cuve et le condenseur refroidi par exemple par de l'air que l'on fait circuler au moyen d'une cheminée, sans apport d'énergie mécanique extérieure, le système fonctionnant entièrement en convection naturelle. De plus, la traversée de la dalle du réacteur par un conduit constituant le collecteur adiabatique qui relie l'évaporateur et le condenseur permet de bénéficier d'un encombrement diamétral réduit au niveau de la dalle et d'une perte de charge réduite entre l'évaporateur et le condenseur.

Conformément à une caractéristique secondaire de l'invention, la paroi du conduit constituant le collecteur ainsi que la paroi de chacun des tubes de l'évaporateur présentent intérieurement une structure capillaire canalisant le fluide caloporteur en phase liquide, de façon à éviter l'entraînement de ce dernier par le fluide en phase vapeur et à régulariser son écoulement vers l'évaporateur.

De préférence, l'extrémité supérieure du faisceau de tubes est implantée sur une plaque à tubes constituant l'extrémité inférieure du collecteur adiabatique et l'extrémité supérieure de chacun des tubes fait saillie sur une hauteur donnée au-dessus de la plaque à tubes pour définir un réservoir tampon de fluide caloporteur en phase liquide. Afin d'assurer la répartition uniforme du débit de fluide caloporteur en phase liquide dans chaque tube, l'extrémité supérieure de ces derniers qui fait saillie au-dessus de la plaque à tubes peut présenter au moins une série de créneaux et/ou de trous percés sur la paroi latérale des tubes.

La circulation du métal liquide contenu dans la cuve autour du faisceau de tubes de l'évaporateur peut être canalisée au moyen d'une virole entourant le faisceau, présentant au moins une fenêtre d'entrée à son extrémité supérieure et ouverte à son extrémité inférieure pour assurer la sortie du métal liquide et permettre à la virole et au tube de se dilater librement vers le bas.

Conformément à un premier mode de réalisation de l'invention, le condenseur est supporté par la dalle du réacteur et logé à l'intérieur de l'enceinte de ce dernier. Il peut alors comprendre un caisson dans lequel sont logés un collecteur torique d'alimentation communiquant avec l'extrémité supérieure du conduit constituant le collecteur adiabatique, un collecteur torique de réception des condensats disposé en dessous du collecteur d'alimentation et un faisceau annulaire de tubes à ailettes reliant les collecteurs d'alimentation et de réception des condensats, le fluide de refroidissement externe étant de l'air atmosphérique qui pénètre dans le caisson par une conduite latérale et en ressort par une cheminée placée au-dessus du collecteur d'alimentation.

Conformément à un deuxième mode de réalisation de l'invention, le condenseur est disposé à l'extérieur de l'enceinte du réacteur. Il peut alors comprendre un caisson dans lequel sont logés un collecteur d'alimentation sensiblement horizontal et rectiligne communiquant avec l'extrémité supérieure du conduit constituant le collecteur adiabatique, deux collecteurs de réception des condensats disposés en dessous du collecteur d'alimentation et de part et d'autre du plan vertical passant par ce dernier et deux faisceaux plans de tubes à ailettes reliant le collecteur d'alimentation au collecteur de réception des condensats pour définir un dièdre à arêtes sensiblement horizontales, le fluide de refroidissement étant de l'air atmosphérique qui pénètre dans le caisson par l'intérieur du dièdre et en ressort par une cheminée placée au-dessus des faisceaux de tubes.

On décrira maintenant, à titre d'exemple non limitatif, deux modes de réalisation de l'invention en se référant aux dessins annexés dans lesquels :

la figure 1 est une vue schématique, en coupe transversale partielle, d'un réacteur nucléaire à neutrons rapides comportant des dispositifs d'évacuation de la puissance résiduelle réalisés conformément à un premier mode de réalisation de l'invention,

la figure 2 est une vue en coupe verticale à plus grande échelle illustrant le détail de réalisation d'un des dispositifs d'évacuation de la puissance résiduelle équipant le réacteur de la figure 1,

la figure 3 est une vue en coupe verticale, encore à plus grande échelle, montrant le détail de la fixation des tubes de l'évaporateur du dispositif de la figure 2,

la figure 4 est une vue en coupe horizontale selon la ligne IV-IV de la figure 2, montrant le caisson en forme de volute assurant l'arrivée de l'air de refroidissement du condenseur dans le mode de réalisation de la figure 2,

la figure 5 est une vue en coupe verticale d'une partie du réacteur nucléaire à neutrons rapides illustrant un second mode de réalisation du dispositif d'évacuation de la puissance résiduelle selon l'invention, et

la figure 6 est une vue en coupe verticale selon la ligne VI-VI de la figure 5 montrant le condenseur du dispositif d'évacuation de la puissance résiduelle représenté sur la figure 5.

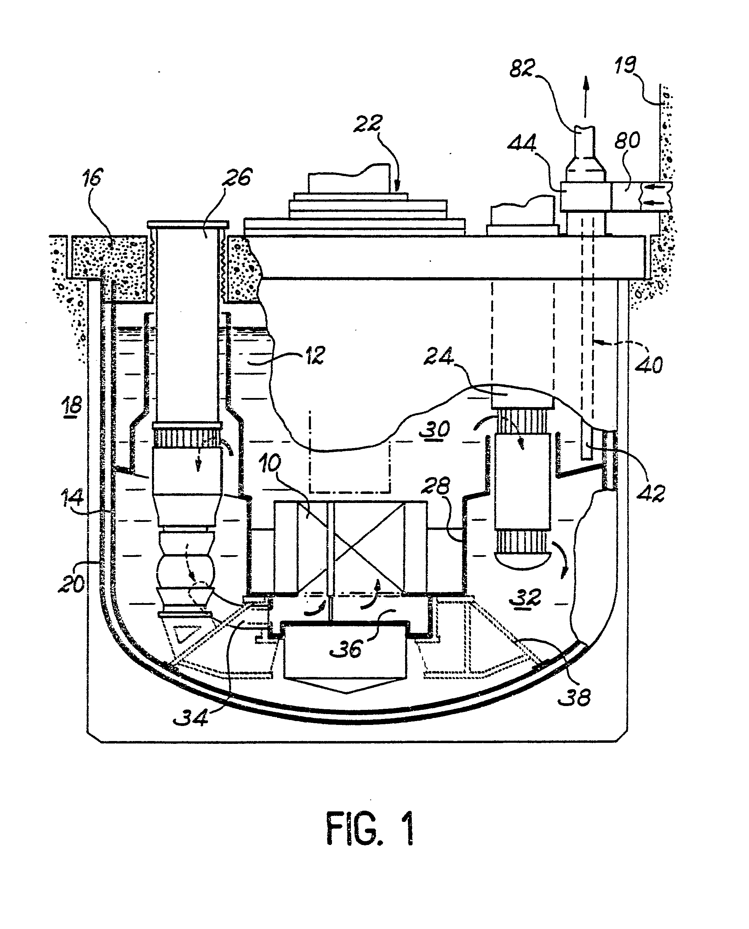

On a représenté schématiquement sur la figure 1, un réacteur nucléaire à neutrons rapides de type intégré. Le cœur 10 du réacteur est immergé dans un volume 12 d'un métal liquide de refroidissement (habituellement du sodium) contenu à l'intérieur d'une cuve 14 à axe vertical. La partie supérieure de la cuve 14 est obturée par une dalle de fermeture horizontale 16 reposant par sa périphérie sur un puits de cuve 18. La cuve 14, dite cuve principale, est doublée à l'intérieur du puits de cuve 18 par une cuve de sécurité 20 qui est suspendue à la dalle 16 comme la cuve 14. Les composants placés au-dessus de la dalle 16 sont disposés dans une enceinte de confinement 19 dont une partie seulement est représentée sur la figure 1.

Dans les réacteurs de type intégré tels que celui qui est représenté schématiquement sur la figure 1, la dalle 16 est traversée par une série de composants nécessaires au fonctionnement du réacteur. La dalle supporte notamment dans sa partie centrale un système de bouchons tournants 22 et, dans sa partie périphérique, des échangeurs intermédiaires 24 et des pompes primaires 26 régulièrement répartis autour du cœur.

Une cuve interne 28 définit à l'intérieur de la cuve 14 un collecteur « chaud » 30 contenant le métal liquide « chaud » débouchant à l'extrémité supérieure du cœur 10 et un collecteur « froid » 32 dans lequel est recueilli le métal liquide sortant des échangeurs 24. Le métal liquide est ensuite repris par les pompes 26 pour être renvoyé à travers des conduites 34 dans un sommier 36 assurant à la fois l'alimentation du cœur 10 en métal liquide et le supportage du cœur sur le fond de la cuve 14 par l'intermédiaire d'un platelage 38. En fonctionnement, le métal liquide circule ainsi en permanence à travers le cœur. Les échangeurs 24 assurent l'extraction de la chaleur dégagée par la réaction de fission. Cette chaleur est ensuite transférée à un circuit secondaire (non représenté) avant d'être exploitée dans les turbines d'un circuit eau/vapeur pour produire de l'électricité.

Conformément à l'invention, on dispose également à l'intérieur de la cuve 14 les évaporateurs 42 de dispositifs 40 d'évacuation de la puissance résiduelle. Ces dispositifs 40, dont l'un seulement est représenté sur la figure 1, traversent la dalle 16 et permettent, en cas d'arrêt des pompes primaires 26, d'assurer un refroidissement convenable du métal liquide chaud contenu dans le collecteur 30 de façon à évacuer la puissance résiduelle du réacteur.

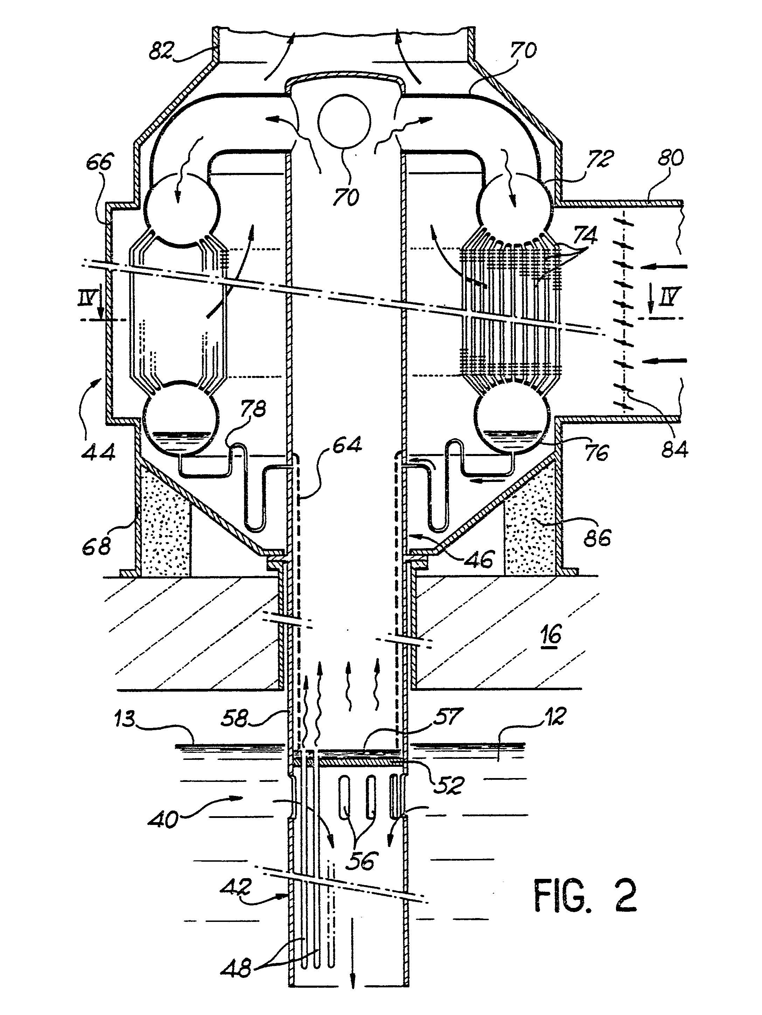

La figure 2 illustre à plus grande échelle le détail de réalisation de l'un des dispositifs 40. Chacun des dispositifs 40 comprend un évaporateur 42 disposé en dessous de la dalle 16 et baignant dans le métal liquide 12, un condenseur 44 disposé au-dessus de la dalle 16 et à l'intérieur de l'enceinte 19 du réacteur (figure 1) et un collecteur adiabatique 46 traversant la dalle 16 pour faire communiquer l'évaporateur 42 avec le condenseur 44.

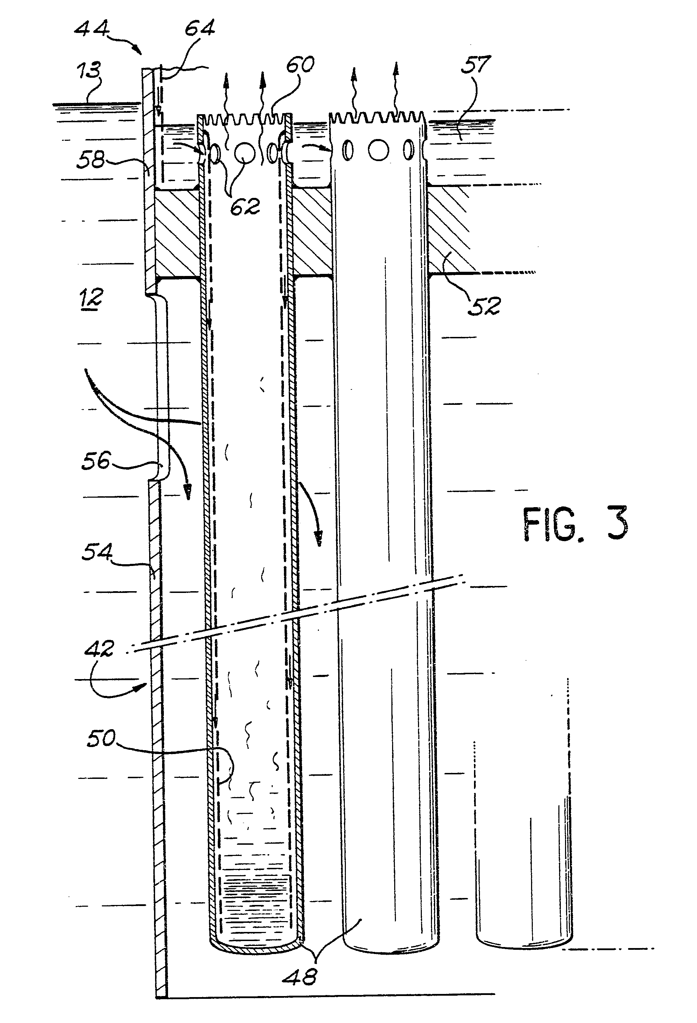

Comme le montrent plus clairement les figures 2 et 3, l'évaporateur 42 comprend un faisceau de tubes droits et verticaux 48 obturés à leur extrémité inférieure pour présenter la forme de doigts de gant. Les tubes 48 sont entièrement disposés en dessous du niveau libre 13 du métal liquide 12. Afin d'assurer, comme on le verra ultérieurement, la canalisation de la phase liquide du fluide caloporteur contenu dans le dispositif 40, la paroi interne de chacun des tubes 48 est tapissée d'une structure capillaire 50. Chacun des tubes 48 est implanté au voisinage de son extrémité supérieure ouverte sur une plaque à tubes horizontale 52 qui définit en même temps l'extrémité inférieure du collecteur adiabatique 46. Bien entendu, cette implantation est réalisée de façon étanche, par exemple par soudure.

L'évaporateur 42 comprend en outre une virole 54 soudée à la plaque à tubes 52 et entourant le faisceau de tubes 48. La virole 54 est destinée à canaliser l'écoulement du métal liquide 12 autour des tubes 48. A cet effet, la virole 54 présente à sa partie supérieure, à proximité de la plaque à tubes 52, des fenêtres d'entrée 56, et elle est ouverte à sa partie inférieure. Il s'établit ainsi un écoulement du métal liquide 12 par thermosiphon entre les fenêtres 56 et l'orifice inférieur de la virole. De plus, cette configuration de la virole 54 lui permet de se dilater librement vers le bas en même temps que les tubes 48.

On voit aussi sur la figure 3 que l'extrémité supérieure de chacun des tubes 48 fait saillie au-dessus de la plaque à tubes 52 sur une hauteur donnée. Cette caractéristique permet de définir un réservoir-tampon 57 dans la partie inférieure d'une conduite verticale 58 qui prolonge la virole 54 au-dessus de la plaque à tubes 52 pour définir le collecteur adiabatique 44.

Le réservoir-tampon 57 ainsi formé au-dessus de la plaque à tubes 52 constitue d'autre part le déversoir d'alimentation de la structure capillaire tapissant l'intérieur de chacun des tubes 48. Comme l'illustre la figure 3, la répartition uniforme du débit du fluide caloporteur à l'état liquide dans chacun des tubes peut être obtenue en réalisant des créneaux en dents de scie 60 à l'extrémité supérieure de chacun des tubes, et en perçant une série de trous 62 dans la paroi latérale des tubes. Bien entendu, ces deux solutions peuvent être dissociées, c'est-à-dire que l'extrémité supérieure de chacun des tubes peut être soit munie de créneaux du type des créneaux 60, soit percée de trous du type des trous 62.

Si l'on se réfère à nouveau à la figure 2, on voit que l'existence du collecteur adiabatique 46 constitué par le conduit 58, est imposée par la distance séparant le niveau libre 13 du métal liquide contenu dans la cuve et en dessous duquel doit être placé l'évaporateur 42, de l'entrée dans le condenseur 44 situé au-dessus de la dalle 16. Dans ce collecteur, l'écoulement de la phase vapeur du fluide caloporteur subit une perte de charge inévitable qui se traduit par une diminution du flux axial. Afin de réduire cette perte de charge à une valeur aussi faible que possible et de diminuer le diamètre de la traversée de la dalle 16 par le collecteur 46, on a choisi, comme on l'a déjà indiqué, de raccorder l'ensemble des tubes 48 de l'évaporateur 42 à un condenseur unique 44 par l'intermédiaire d'un conduit vertical unique 58 assurant la collecte de la vapeur produite dans les tubes 48. Cette solution permet notamment de diminuer les pertes de charge dans le collecteur adiabatique dans un rapport minimum de 20 % par rapport aux autres solutions possibles telles que celle qui consisterait à réaliser un faisceau de caloducs individuels comportant chacun une zone adiabatique et un condenseur.

De préférence, la paroi intérieure du conduit vertical 58 est tapissée sur sa face interne d'une structure capillaire 64 permettant, comme la structure capillaire 50 de chacun des tubes 48, d'éviter les entraînements du fluide caloporteur en phase liquide par la phase gazeuse sortant des tubes 48 et de régulariser le film liquide retournant à l'évaporateur 42 par l'intermédiaire du réservoir-tampon 57.

Dans une autre variante de réalisation (non représentée), la structure capillaire 64 peut être remplacée par au moins une tuyauterie de faible diamètre pour assurer le retour du liquide au réservoir-tampon 57.

Dans le mode de réalisation de l'invention représenté sur la figure 2, le condenseur 44 comprend un caisson 66 qui repose par l'intermédiaire d'une jupe cylindrique 68 sur la dalle 16 du réacteur. Le conduit vertical 58 définissant le collecteur adiabatique 46 se prolonge vers le haut à l'intérieur du caisson 66 pour déboucher dans quatre coudes 70 disposés à 90° les uns par rapport aux autres. Les coudes 70 redescendent vers un collecteur torique d'alimentation 72 du condenseur proprement dit. Ce dernier est constitué de tubes à ailettes 74 répartis par exemple sur dix nappes circulaires et concentriques, de manière à former un faisceau annulaire. Les extrémités inférieures des tubes 74 débouchent dans un collecteur torique de réception des condensats 76 semblable au collecteur 72 et disposé en dessous de ce dernier. De façon plus précise, les extrémités des tubes 74 sont fixées de façon étanche aux collecteurs 72 et 76, par exemple par soudure. Les collecteurs 72 et 76 ainsi que le faisceau de tubes 74 sont disposés coaxialement par rapport au conduit vertical 58.

Le fluide caloporteur en phase liquide qui se forme dans le collecteur 76 est recyclé vers le collecteur adiabatique 46 par des tuyauteries coudées 78 qui débouchent dans le conduit 58 à l'extrémité supérieure de la structure capillaire 64 formée à l'intérieur de ce dernier. On voit sur la figure 2 que les tuyauteries 78 sont coudées en forme de siphon, de manière à former une garde hydraulique dont la hauteur développée correspond à la différence des tensions de vapeur.

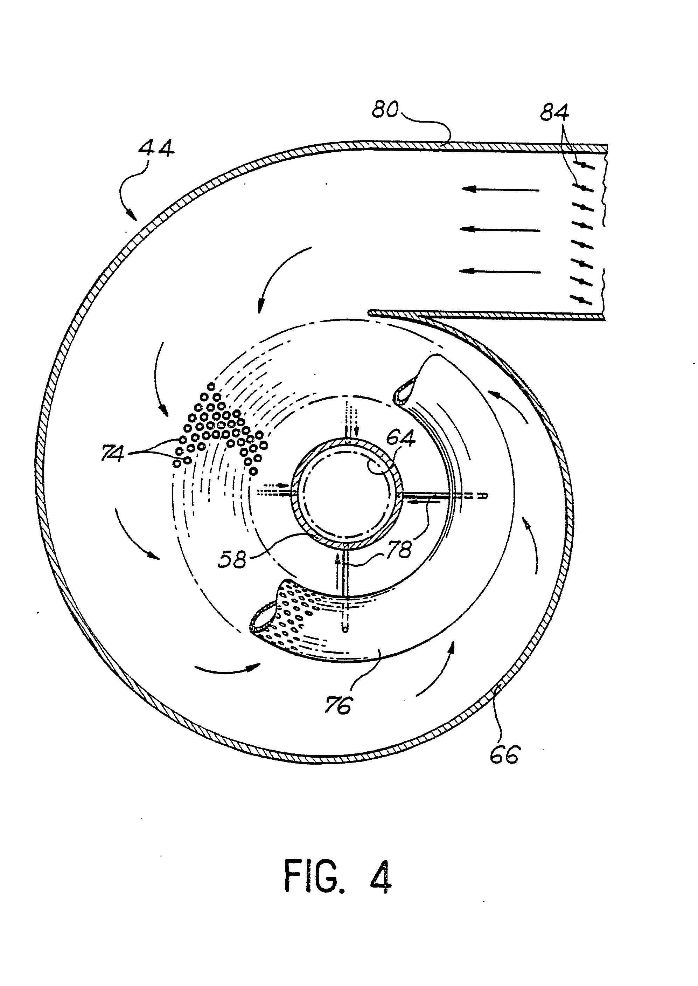

Dans le mode de réalisation représenté sur la figure 2, le refroidissement du condenseur 44 s'effectue au moyen de l'air atmosphérique. L'air est aspiré à l'intérieur du caisson 66 par une conduite latérale 80 sous l'effet de la dépression créée dans le caisson par une cheminée verticale 82 disposée au-dessus de ce dernier. On voit sur la figure 4 que le caisson 66 présente au niveau du faisceau de tubes 74 la forme d'une volute de ventilateur centrifuge, ce qui permet à l'air de refroidissement de circuler de façon relativement homogène à l'intérieur du faisceau. Afin de permettre la mise en service ou hors service du dispositif représenté sur la figure 2, des ventelles 84 sont placées dans la conduite latérale 80 à l'entrée du caisson 66. Enfin, il est prévu à l'intérieur de la jupe de supportage 68 une protection biologique 86.

Dans une variante de réalisation non représentée, le condenseur 44 peut être relié à l'ensemble évaporateur 40-collecteur adiabatique 46 par un joint à brides, de telle sorte qu'un démontage de ce joint autorise une réparation éventuelle de l'évaporateur.

De préférence, le fluide caloporteur contenu dans le dispositif 40 est constitué par du mercure. En effet, les caractéristiques de ce produit concernant notamment l'étendue du domaine de température dans lequel il peut être utilisé (170 °C-600 °C), sa faible tension de vapeur (2 à 11 bars) dans le domaine de température considéré (390 °C-530 °C), l'importance du transfert de chaleur axial qu'il autorise, sa dissolution dans le sodium en cas de fuite, aussi bien que sa tenue aux rayonnements le font préférer aux autres produits susceptibles d'être utilisés tels que le potassium, le sodium ou le soufre.

Comme l'illustrent les flèches sur les figures 2 à 4, le fonctionnement du dispositif qui vient d'être décrit est le suivant.

Le mercure à l'état liquide qui se trouve dans le fond des tubes 48 de l'évaporateur 42 est réchauffé par le métal liquide 12 contenu dans la cuve du réacteur qui circule en convection naturelle entre les fenêtres d'entrée 56 et l'embouchure de sortie formée à l'extrémité inférieure de la virole 54. Le mercure est ainsi vaporisé et monte dans le conduit vertical 58 pour parvenir dans le collecteur d'alimentation 72 par l'intermédiaire des conduites coudées 70. Lorsque le dispositif est mis en service en ouvrant les ventelles 84, la dépression qui se crée dans le caisson 66, par suite de l'aspiration de l'air par la cheminée 82, fait circuler l'air au travers du faisceau de tubes à ailettes 74, ce qui a pour effet de condenser le mercure dont la phase liquide est recueillie dans le collecteur 76. Cette phase liquide est ensuite acheminée par les canalisations 78 et la structure capillaire 64 dans le réservoir-tampon 57, d'où elle redescend dans chacun des tubes 48 par l'intermédiaire des structures capillaires 50. Le refroidissement à l'arrêt du réacteur est ainsi réalisé sans apport d'énergie mécanique extérieure puisque le dispositif fonctionne entièrement en convection naturelle.

En outre, dans les limites de la puissance maximale qui peut être évacuée au condenseur 44 en fonction de la température de vapeur du mercure, on notera qu'à tout accroissement de la température du métal liquide 12 à l'intérieur de la cuve, correspond un accroissement de la température de vaporisation du mercure et donc de la puissance axiale transférée. Le dispositif est donc autorégulateur.

Dans le mode de réalisation qui vient d'être décrit en se référant aux figures 2 à 4, l'enceinte 19 du réacteur (figure 1) doit être traversée par les gaines d'air de grande dimension que sont la conduite d'arrivée 80 et la cheminée 82. De plus, l'encombrement du condenseur 44 au-dessus de la dalle 16 est relativement important compte tenu de la présence des autres composants.

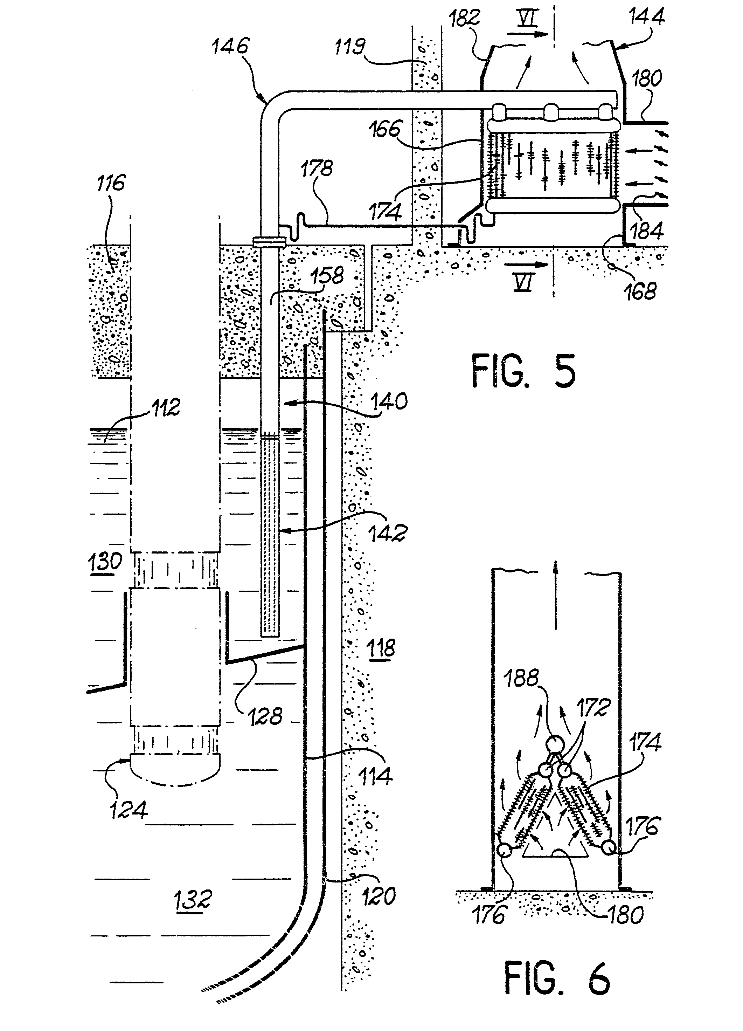

Pour remédier à ces inconvénients, on a représenté sur les figures 5 et 6 un deuxième mode de réalisation de l'invention qui diffère essentiellement du mode de réalisation des figures 2 à 4 par la conception différente du condenseur et par la disposition de ce condenseur à l'extérieur de l'enceinte du réacteur. Pour simplifier, on utilisera les mêmes chiffres de référence augmentés de 100 pour désigner des éléments semblables à ceux du premier mode de réalisation.

On voit sur la figure 5, la partie droite de la cuve du réacteur représenté sur la figure 1 et on reconnaît notamment la cuve principale 114 contenant le métal liquide 112, la cuve de sécurité 120 doublant la cuve principale 114, la dalle 116 assurant le supportage des cuves 114 et 120 et dont le rebord périphérique repose sur le puits de cuve 118, la cuve interne 128 séparant le collecteur chaud 130 du collecteur froid 132, ainsi qu'un échangeur de chaleur 124.

On a également représenté sur la figure 5, un dispositif d'évacuation de la puissance résiduelle 140 comprenant un évaporateur 142 baignant dans le métal liquide 112, un condenseur 144 disposé au-dessus de la dalle 116 et à l'extérieur du bâtiment réacteur 119 dans ce mode de réalisation, ainsi que le collecteur adiabatique 146. L'évaporateur 142 et le collecteur adiabatique 146 sont identiques en se référant au premier mode de réalisation.

En revanche, on voit qu'en plus de sa disposition à l'extérieur de l'enceinte 119, le condenseur 144 est d'une conception différente de celui du mode de réalisation précédent. En effet, si ce condenseur comprend également un caisson 166 reposant, par l'intermédiaire d'une virole 168, sur la structure du puits de cuve 118, et si l'arrivée et l'évacuation de l'air de refroidissement s'effectuent également par une conduite latérale 180 et par une cheminée 182, on voit que le condenseur proprement dit est formé de deux faisceaux plans de tubes à ailettes 174 (figure 6) qui sont disposés suivant un dièdre à arête horizontale ou légèrement inclinée par rapport à l'horizontale. L'arête du dièdre ainsi formé est matérialisée par le conduit d'alimentation en vapeur 188 qui prolonge le conduit 158 constituant le collecteur adiabatique 146 et traverse l'enceinte 119 pour pénétrer dans le caisson 166. Ce conduit d'alimentation 188 communique avec deux collecteurs d'alimentation 172 dans lesquels débouche l'extrémité supérieure de chacun des faisceaux de tubes 174. L'extrémité inférieure de ces faisceaux débouche dans des collecteurs de réception des condensats 176. Comme la conduite 188, les collecteurs 172 et 176 sont rectilignes et sensiblement horizontaux. Plus précisément, on voit sur la figure 6 que les collecteurs 176 sont disposés en dessous des collecteurs d'alimentation 172 et de part et d'autre du plan vertical passant par la conduite 188. De plus, les collecteurs 172 et 176 ainsi que les faisceaux de tubes 174 sont disposés de façon sensiblement symétrique par rapport à ce plan.

Bien entendu, comme dans le premier mode de réalisation, les collecteurs 176 sont reliés à la conduite 158 à l'intérieur de la structure capillaire de cette dernière par des tuyauteries 178 coudées en forme de siphon. Comme le montrent les figures 5 et 6, l'alimentation en air par la conduite 180, après ouverture des ventelles 184, s'effectue par l'intérieur du dièdre formé par les tubes 174, de manière à favoriser la convection naturelle. L'air traverse ainsi les faisceaux de tubes avant de s'échapper par la cheminée 182.

Bien entendu, l'invention n'est pas limitée aux modes de réalisation qui viennent d'être décrits à titre d'exemple mais en couvre toutes les variantes. Ainsi, on comprendra que le fluide assurant le refroidissement du condenseur 44, 144 n'est pas limité à l'air atmosphérique ni même aux gaz et pourrait éventuellement être de l'eau, même si la fonction de sûreté que doivent remplir les dispositifs de refroidissement du réacteur à l'arrêt donne la préférence au refroidissement par l'air atmosphérique.

De même, on comprendra que les dispositions et les conceptions des condenseurs décrites respectivement en se référant aux figures 2 à 4 et en se référant aux figures 5 et 6 peuvent éventuellement être inversées. Ainsi, on pourrait placer à l'intérieur de l'enceinte du réacteur un condenseur du type de celui qui a été décrit en se référant aux figures 5 et 6. Inversement, on pourrait aussi placer à l'extérieur de l'enceinte un condenseur du type de celui qui a été décrit en se référant aux figures 2 et 4.

Enfin, on comprendra que ce dispositif d'évacuation de la puissance résiduelle peut être utilisé aussi bien dans un réacteur à boucles que dans un réacteur du type intégré.

**Revendications**

1. Réacteur nucléaire à neutrons rapides comportant une cuve (14, 114) à axe vertical contenant le cœur (10) du réacteur et un volume (12, 112) de métal liquide de refroidissement de celui-ci, une dalle de fermeture horizontale (16, 116) obturant la cuve à sa partie supérieure, au moins une pompe primaire (26) et au moins un échangeur de chaleur (24, 124) assurant respectivement, en fonctionnement, la circulation du métal liquide dans le cœur et son refroidissement, et au moins un dispositif (40, 140) d'évacuation de la puissance résiduelle assurant le refroidissement du métal liquide en cas d'arrêt des pompes primaires, caractérisé en ce que le dispositif (40, 140) d'évacuation de la puissance résiduelle comprend un évaporateur (42, 142) comportant un faisceau de tubes (48) en doigts de gant baignant dans le métal liquide de façon à faire passer en phase vapeur un fluide caloporteur initialement en phase liquide, un collecteur adiabatique (46, 146) de ladite phase vapeur comportant un conduit (58, 158) traversant la dalle du réacteur et un condenseur (44, 144) dans lequel le fluide caloporteur en phase vapeur échange sa chaleur avec un fluide de refroidissement externe et se condense en phase liquide avant de redescendre dans l'évaporateur par le collecteur adiabatique.

2. Réacteur nucléaire selon la revendication 1, caractérisé en ce que le fluide caloporteur est du mercure.

3. Réacteur nucléaire selon l'une quelconque des revendications 1 ou 2, caractérisé en ce que la paroi du conduit (58, 158) constituant le collecteur ainsi que la paroi de chacun des tubes (48) de l'évaporateur présentent intérieurement une structure capillaire (50, 64) canalisant le fluide caloporteur en phase liquide.

4. Réacteur nucléaire selon l'une quelconque des revendications précédentes, caractérisé en ce que l'extrémité supérieure du faisceau de tubes (48) est implantée sur une plaque à tubes (52) constituant l'extrémité inférieure du collecteur adiabatique (46, 146) et en ce que l'extrémité supérieure de chacun des tubes fait saillie sur une hauteur donnée au-dessus de la plaque à tubes pour définir un réservoir-tampon (57) de fluide caloporteur en phase liquide.

5. Réacteur nucléaire selon la revendication 4, caractérisé en ce que l'extrémité supérieure de chacun des tubes (48) qui fait saillie au-dessus de la plaque à tubes (52) présente au moins une série de créneaux (60) et/ou de trous (62) sur sa périphérie.

6. Réacteur selon l'une quelconque des revendications précédentes, caractérisé en ce que l'évaporateur (42, 142) comporte de plus une virole (54) entourant le faisceau de tubes (48), ouverte à son extrémité inférieure et présentant au moins une fenêtre d'entrée (56) à son extrémité supérieure.

7. Réacteur selon l'une quelconque des revendications précédentes, caractérisé en ce que le condenseur (44) est supporté par la dalle (16) du réacteur et logé à l'intérieur de l'enceinte (19) de ce dernier.

8. Réacteur selon l'une quelconque des revendications 1 à 6, caractérisé en ce que le condenseur (144) est disposé à l'extérieur de l'enceinte (119) du réacteur.

9. Réacteur selon l'une quelconque des revendications 1 à 8, caractérisé en ce que le condenseur (44) comprend un caisson (66) dans lequel sont logés un collecteur torique d'alimentation (72) communiquant avec l'extrémité supérieure du conduit (58) constituant le collecteur adiabatique, un collecteur torique (76) de réception des condensats disposé en dessous du collecteur d'alimentation, et un faisceau annulaire de tubes à ailettes (74) reliant les collecteurs d'alimentation et de réception des condensats, le fluide de refroidissement externe étant de l'air atmosphérique qui pénètre dans le caisson par une conduite latérale (80) et en ressort par une cheminée (82) placée au-dessus du collecteur d'alimentation.

10. Réacteur selon l'une quelconque des revendications 1 à 8, caractérisé en ce que le condenseur (144) comprend un caisson (166) dans lequel sont logés au moins un collecteur d'alimentation (172) sensiblement horizontal et rectiligne, communiquant avec l'extrémité supérieure du conduit (158) constituant le collecteur adiabatique, deux collecteurs (176) de réception des condensats disposés en dessous du collecteur d'alimentation et de part et d'autre du plan vertical passant par ce dernier et deux faisceaux plans de tubes à ailettes (174) reliant le collecteur d'alimentation aux collecteurs de réception des condensats pour définir un dièdre à arête sensiblement horizontale, le fluide de refroidissement externe étant de l'air atmosphérique qui pénètre dans le caisson par l'intérieur du dièdre et en ressort par une cheminée (182) placée au-dessus des faisceaux de tubes.

## Claims

1. Fast neutron reactor comprising a tank (14, 114) with a vertical axis containing the reactor core (10) and a volume (12, 112) of liquid metal coolant, a horizontal closure slab (16, 116) covering the top of the tank, at least one primary pump (26) and at least one heat exchanger (24, 124) respectively ensuring, during operation, the circulation of liquid metal in the core and its cooling, and at least one device (40, 140) for dissipating the residual heat to ensure cooling of the liquid metal in the case of stoppage of the primary pumps, characterized in that the device (40, 140) for dissipating residual heat comprises an evaporator (42, 142) having a tube bundle (48) of the glove-finger type, dipping into the metal whereby to vaporise a heat-transfer fluid initially in liquid phase, an adiabatic collector (46, 146) of resulting vapor phase comprising a conduit (58, 158) traversing the reactor slab and a condenser (44, 144) in which the heat transfer fluid in vapor phase exchanges its heat with an external cooling fluid, and condenses into the liquid phase before redescending into the evaporator from the adiabatic collector.

2. Nuclear reactor according to Claim 1, characterized in that the heat transfer fluid is mercury.

3. Nuclear reactor according to either of Claims 1 and 2, characterized in that the wall of a conduit (58, 158) constituting the collector as well as the wall of each of the tubes (48) of the evaporator has an internal capillary structure (50, 64) channeling the heat transfer fluid in the liquid phase.

4. Nuclear reactor according to any one of the preceding Claims, characterized in that the upper end of the bundle of tubes (48) is fixed to a tube plate (52) constituting the lower end of the adiabatic collector (46, 146) and in that the upper end of the tubes projects a predetermined height above the tube plate to define a buffer reservoir (57) for heat transfer fluid in the liquid phase.

5. Nuclear reactor according to Claim 4, characterized in that the upper end of each of the tubes (48) projecting above the tube plate (52) has at least one series of crenellations (60) and/or holes around its periphery.

6. Reactor according to any one of the preceding Claims, characterized in that the evaporator (42, 142) comprises at least one sheath (54) surrounding the bundle of tubes (48), open at its lower end and having at least one inlet port (56) at its upper end.

7. Reactor according to any one of the preceding Claims, characterized in that the condenser (54) is supported on the reactor slab (16) and located inside the enclosure (19) of the latter.

8. Reactor according to any one of Claims 1 to 6, characterized in that the condenser (144) is located externally of the reactor enclosure (119).

9. Reactor according to any one of Claims 1 to 8, characterized in that the condenser (44) comprises a caisson (66) in which are located an annular inlet manifold (72) communicating with the upper end of conduit (58) constituting the adiabatic collector, an annular manifold (76) for receiving condensate located below the inlet manifold, and an annular bundle of finned tubes (74) connecting the inlet and condensate-receiving manifolds, the external cooling fluid being atmospheric air which enters the caisson through a lateral conduit (80) and leaves through a stack (82) placed above the inlet manifold.

10. Reactor according to any one of Claims 1 to 8, characterized in that the condenser (144) comprises a caisson (166) within which are located at least one substantially horizontal straight inlet manifold (172), communicating with the upper end of conduit (158) constituting the adiabatic collector, two manifolds (176) for receiving condensate disposed below the inlet manifold and on either side of the vertical plane passing through the latter, and two flat bundles of finned tubes (174) connecting the inlet manifold to the condensate-receiving manifolds, whereby to define a dihedral with a substantially horizontal ridge, the external cooling fluid being atmospheric air which enters the caisson through the inside of the dihedral and leaves by a stack (182) placed above the tube bundle.

**Patentansprüche**

1. Schneller Brüter mit einem Behälter (14, 114) mit vertikaler Achse, der den Kern (10) des Reaktors und ein Flüssigmetallvolumen (12, 112) zu dessen Kühlung enthält, einer horizontalen Abschlußplatte (16, 116), die den Behälter an seinem oberen Abschnitt verschließt, wenigstens einer Primärpumpe (26) und wenigstens einem Wärmetauscher (24, 124), die jeweils im Betrieb den Kreislauf des Flüssigmetalls in dem Kern und dessen Kühlung sicherstellen, und wenigstens einer Einrichtung (40, 140) zur Abführung von Restwärme, die beim Stillstand der Primärpumpen die Kühlung des Flüssigmetalls sicherstellt, dadurch gekennzeichnet, daß die Einrichtung (40, 140) zur Abführung von Restwärme umfaßt ein handschuhfingerförmiges Rohrbündel (48), welches von dem Flüssigmetall derart bespült wird, daß es ein sich anfangs in Flüssigphase befindendes Wärmeträgerfluid in Dampfphase hindurchgehen läßt, einen adiabatischen Sammler (46, 146) für die Dampfphase, der eine die Platte des Reaktors durchquerende Leitung (58, 158) und einen Kondensator (44, 144) aufweist, in welchem das Wärmeträgerfluid in Dampfphase seine Wärme mit einem äußeren Kühlfluid austauscht und zur Flüssigphase kondensiert, bevor es erneut über den adiabatischen Kollektor in den Verdampfer absteigt.

2. Kernreaktor nach Anspruch 1, dadurch gekennzeichnet, daß das Wärmeträgerfluid Quecksilber ist.

3. Kernreaktor nach Anspruch 1 oder 2, dadurch gekennzeichnet, daß die Wand der Leitung (58, 158), welche den Kollektor bildet, sowie die Wand jedes der Rohre (48) des Verdampfers innen eine Kapillarstruktur (50, 64) aufweisen, die das Wärmeträgerfluid in der Flüssigphase kanalisiert.

4. Kernreaktor nach einem der vorgehenden Ansprüche, dadurch gekennzeichnet, daß das obere Ende des Rohrbündels (48) an einer Rohrplatte (52) angebracht ist, die das untere Ende des adiabatischen Sammlers (46, 146) bildet, und daß das obere Ende von jedem Rohr über eine vorgegebene Höhe über die Rohrplatte vorsteht, um einen Pufferbehälter (57) für das Wärmeträgerfluid in der Flüssigphase festzulegen.

5. Kernreaktor nach Anspruch 4, dadurch gekennzeichnet, daß das obere Ende von jedem der Rohre (48), welches über die Rohrplatte (52) hervorsteht, wenigstens eine Reihe von Zacken (60) und/oder von Öffnungen (62) über seinen Umfang aufweist.

6. Reaktor nach einem der vorhergehenden Ansprüche, dadurch gekennzeichnet, daß der Verdampfer (42, 142) wenigstens eine Umhüllung (54) aufweist, die das Rohrbündel (48) umgibt, an ihrem unteren Ende offen ist und an ihrem oberen Ende wenigstens ein Eintrittsfenster (56) aufweist.

7. Reaktor nach einem der vorhergehenden Ansprüche, dadurch gekennzeichnet, daß der Kondensator (44) von der Platte (16) des Reaktors abgestützt und im Inneren der Umhüllung (19) von letzterem angeordnet ist.

8. Reaktor nach einem der Ansprüche 1 bis 6, dadurch gekennzeichnet, daß der Kondensator (144) außerhalb der Umhüllung (119) des Reaktors angeordnet ist.

9. Reaktor nache einem der Ansprüche 1 bis 8, dadurch gekennzeichnet, daß der Kondensator (44) einen Behälter (66) umfaßt, in welchem ein torusförmiger Zufuhrsammler (72), der mit dem oberen Ende der den adiabatischen Sammler darstellenden Leitung (58) in Verbindung steht, ein torusförmiger, unterhalb des Zufuhrsammlers angeordneter Sammler (76) zur Aufnahme des Kondensats sowie ein ringförmiges Bündel aus Rohren (74) mit Rippen untergebracht sind, welche den Zufuhrsammler und den Sammler zur Aufnahme des Kondensats verbinden, und daß das äußere Kühlfluid Umgebungsluft ist, die in den Behälter durch eine seitliche Leitung (80) gelangt und aus diesem durch einen Abzug (82) ausströmt, der oberhalb des Zufuhrsammlers angeordnet ist.

10. Reaktor nach einem der Ansprüche 1 bis 8, dadurch gekennzeichnet, daß der Kondensator (144) einen Behälter (166) umfaßt, in welchem wenigstens ein im wesentlichen horizontaler und geradliniger Zufuhrsammler (172), der mit dem oberen Ende der den adiabatischen Sammler bildenden Leitung (158) in Verbindung steht, zwei Sammler (176) zur Aufnahme des Kondensats, die oberhalb des Zufuhrsammlers und einer durch diesen hindurchgehenden, senkrechten Ebene gegenüberliegend angeordnet sind, und zwei ebene Bündel von Rohren mit Rippen (174) untergebracht sind, die den Zufuhrsammler mit den Sammlern zur Aufnahme von Kondensat verbinden, um einen Dieder mit im wesentlichen horizontalem Abschluß festzulegen, und daß das äußere Kühlfluid Umgebungsluft ist, die in den Behälter durch das Innere des Dieders gelangt und durch einen Abzug (182) austritt, der oberhalb des Rohrbündels angeordnet ist.

FIG. 1

FIG. 2

FIG. 3

FIG. 4

FIG. 5

FIG. 6